# EUROPÄISCHE PATENTSCHRIFT

(11) **EP 2 585 341 B1**
(45) Veröffentlichungstag und Bekanntmachung des Hinweises auf die Patenterteilung: **14.05.2014**
(21) Anmeldenummer: 11761268.9
(22) Anmeldetag: 22.06.2011
(51) Int. Cl.: B60P 7/13

(54) **VERRIEGELUNGSVORRICHTUNG FÜR CONTAINER**
LOCKING DEVICE FOR CONTAINERS
DISPOSITIF DE VERROUILLAGE POUR CONTENEUR

(30) Priorität: 25.06.2010 DE 202010005717 U
(43) Veröffentlichungstag der Anmeldung: 01.05.2013
(73) Patentinhaber: RMM Metternich Mechatronik GmbH, 21244 Buchholz (DE)
(72) Erfinder: METTERNICH, Heinz-Rüdiger, 21279 Eversen-Heide (DE)
(74) Vertreter: Hansen, Jochen
(86) Internationale Anmeldenummer: PCT/DE2011/075146
(87) Internationale Veröffentlichungsnummer: WO 2012/022326

(56) Entgegenhaltungen:
- WO-A1-98/08720
- WO-A1-2004/045904
- GB-A- 1 200 243
- US-A- 4 776 736
- US-A1- 2008 170 924

## Beschreibung

Die Erfindung betrifft eine Verriegelungsvorrichtung zur Verriegelung eines Containers auf einer Ladefläche, insbesondere für Straßenfahrzeuge oder Eisenbahntragwagen, wobei der Container standardisierte Eckbeschläge mit einer Öffnung in einer Wandung aufweist und das Beladen in Be- und Entladerichtung erfolgt, mit einem Gehäuse, das zur Ladefläche gerichtet Zentriermittel zur Führung des Eckbeschlages hat, einem ersten Verriegelungshebel, der um eine senkrecht zur Be- und Entladerichtung orientierte Achse schwenkbar angeordnet ist und der in Richtung einer Grundstellung Feder vorbelastet ist, wobei an seinem zum zu verriegelnden Container gerichteten Ende ein Verriegelungskopf vorgesehen ist, der am Zentriermittel angeordnet ist, der eine Auflaufschräge aufweist, mit der der erste Verriegelungshebel gegen die Kraft der Feder beim Beladen des Containers von der Wandung an der Öffnung des Eckbeschlags in seine Beladeposition zurückgedrängt wird, und in der Grundstellung nach dem Beladen durch die Öffnung hinter die Wandung des Eckbeschlags greift.

Eine derartige Verriegelungsvorrichtung ist aus der US 5,613,814 sowie WO 2004/045904 bekannt. Bei dieser Vorrichtung ist der Verriegelungshebel zwischen einer Schwenkachse und einem Führungsstift so geführt, dass beim Abheben des Containers die Sperrklinke des Verriegelungshebels zurückgedrängt wird und somit der Eckbeschlag von der Verriegelungsvorrichtung freigegeben wird. Nachteilig ist jedoch, dass erhebliche Losbrechkräfte erforderlich sind, um den Container abheben zu können. Dies beeinträchtigt insbesondere die Handhabung beim Entladen.

Weiter ist aus der EP 1 937 511 B1 eine Verriegelungsvorrichtung bekannt, bei der zwei Verriegelungshebel in einer Scherenanordnung vorgesehen sind, die jedoch in Richtung ihrer die Öffnung eines Eckbeschlags eines Containers freigebenden Stellung federvorbelastet sind. Die Schließkraft der Verriegelungshebel wird dabei von der Gewichtsauflast des aufzuladenden Containers beim Absetzen auf der Verriegelungsvorrichtung übertragen. Dabei wirkt die Gewichtskraft des Containers gegen die Federvorbelastung der Verriegelungshebel, die mithin bei zunehmender Auflast in ihre Verriegelungsstellung verschwenken.

Ferner ist aus der EP 0 507 010 A1 eine Vorrichtung zum Festlegen von Containern bekannt, die ebenfalls zwei Verriegelungshebel aufweisen, die in einer Scherenanordnung um eine Drehachse verschwenkbar ausgebildet sind. Bei dieser Vorrichtung ist ebenso wie in der EP 1 937 511 B1 die Scherenanordnung mit einer Feder in Richtung seiner Ladeposition vorbelastet, so dass die Vorrichtung frei durch die Öffnung des Eckbeschlages des Containers einführbar ist und durch die Gewichtskraft des Containers gegen die Federkraft in die Verriegelungsposition verschwenkt wird. Durch den Aufbau und die Ausbildung der Verriegelungshebel wird bei dieser Vorrichtung erreicht, dass zwei übereinander gestapelte Container mit dieser zwischen den beiden einander gegenüberstehenden Eckbeschlägen eingefügten Anordnung miteinander verbunden werden.

Ausgehend vom erstgenannten Stand der Technik ist es Aufgabe der Erfindung, eine Verriegelungsvorrichtung anzugeben, die in einfacher und zuverlässiger Weise verriegelt und beim Entladevorgang den Container bei geringer zusätzlicher Last freigibt. Ferner ist es Aufgabe der Erfindung, eine selbsttätig wirkende Sperre bei Erreichen der Verriegelungsstellung vorzusehen.

Gelöst wird die eingangs genannte Aufgabe mit einer Verriegelungsvorrichtung gemäß Anspruch 1. Dadurch, dass die Achse des ersten Verriegelungshebels in Be- und Entladerichtung verschiebbar geführt ist und dass ein Kniehebel vorgesehen ist, der mit seinem freien Ende schwenkbar am vom Eckbeschlag entfernten Ende des ersten Verriegelungshebels angelenkt ist und dessen entgegengesetztes Ende an einem Fixpunkt im Gehäuse schwenkbar befestigt ist, so dass die Achse des ersten Verriegelungshebels in ihrer Beladeposition in Richtung zum Eckbeschlag und in ihrer Grundstellung in Gegenrichtung verschoben ist, wird erreicht, dass beim Beladen der Verriegelungshebel der Verriegelungsvorrichtung gegen die Kraft der Feder nach innen geschwenkt und dabei zwangsweise über die Kniehebelanordnung angehoben wird. Wenn die Öffnung des Eckbeschlags an der Auflaufschräge vorbeigerutscht ist, springt der Verriegelungshebel aufgrund der Federvorbelastung wieder in seine Grundstellung, wobei sich der Verriegelungskopf des Verriegelungshebels zwangsgeführt über die Kniehebelanordnung und die verschiebbar geführte Achse wieder absenkt, so dass sich der Verriegelungskopf in seiner Verriegelungsstellung, nachfolgend Grundstellung genannt, auf der Innenseite der Wandung des Eckbeschlages ablegt und somit den Eckbeschlag hintergreift.

Um ein unbeabsichtigtes Abheben des Containers, beispielsweise im Straßen- oder Eisenbahnverkehr, zu verhindern, ist ein Sperrmittel vorgesehen. Bevorzugt weist das Sperrmittel einen Riegel auf, der in einer Sperrstellung die Achse an einem Verschieben aus der Grundstellung hindert und in einer Freigabestellung ein Verstellen des Verriegelungshebels aus der Grundstellung in die Beladeposition erlaubt. Alternativ könnte das Sperrmittel auch so ausgebildet sein, dass es am Kniehebelgelenk angreift und ein Rückschwenken verhindert.

Um ein unerwünschtes Lösen des Sperrmittels zu verhindern, ist der Riegel in Richtung der Sperrstellung Feder belastet.

Dadurch, dass das Sperrmittel eine erste Laderastposition aufweist, in der der Riegel in der Freigabestellung arretiert ist, wobei ein Auslösemittel vorgesehen ist, so dass mit dem Beladen die erste Laderastposition freigegeben wird, kann das Sperrmittel so voreingestellt werden, dass ein Beladevorgang ohne gleichzeitige manuelle Betätigung des Sperrmittels möglich ist. Ferner wird durch das Auslösemittel unmittelbar mit dem Erreichen des Beladezustandes das Sperrmittel aktiviert, so dass sich beispielsweise der Riegel vor die Achse setzt, so dass eine Verstellung aus der Verriegelungsposition (Grundstellung) und somit ein Abheben/Entladen des Containers nicht möglich ist.

Dabei ist bevorzugt das Auslösemittel ein Tastelement nahe an der Position des Eckbeschlags, das vom aufgeladenen Container ausgelöst wird. Das Tastelement steht beispielsweise aus der Ladefläche hervor und wird durch den Container, insbesondere die äußere Wandung des Eckbeschlags, in dem Moment aktiviert, wenn sich der Container kurz vor dem endgültigen Absetzen auf der Ladefläche befindet. Bevorzugt ist dafür ein erstes federbelastetes Rastmittel vorgesehen.

Wenn das Sperrmittel eine zweite Laderastposition aufweist, in der der Riegel für den Entladevorgang in der Freigabestellung arretiert ist, wobei beim Abheben des Containers das Auslösemittel die zweite Laderastposition freigibt und der Riegel in der Freigabestellung in erster Laderastposition arretiert bleibt, kann das Freigeben des Sperrmittels vor dem Entladevorgang erfolgen. Dazu wird beispielsweise manuell der Riegel gegen seine Federvorbelastung aus seiner Sperrstellung vorgezogen und bevorzugt mittels eines zweiten federbelasteten Rastmittels in der zweiten Laderastposition festgehalten. Für die manuelle Freigabe ist bevorzugt am Sperrmittel ein Handgriff vorgesehen. Selbstverständlich ist es auch möglich, dass das Freigeben der Sperrstellung auch ferngesteuert und kraftbetätigt erfolgt. Wenn dann beim Abheben des Containers das Auslösemittel die zweite Laderastposition freigibt, befindet sich bereits das erste federbelastete Rastmittel mit seinem Tastelement wieder in der vorgeschobenen Stellung, also bereit für eine neue Beladung. In dieser Stellung verbleibt der Riegel somit in seiner Freigabestellung, so dass eine erneute Beladung jederzeit erfolgen kann.

Wenn der Verriegelungskopf an seiner auf der Wandung innerhalb des Eckbeschlags zeigenden Seite eine Schulter hat, die in Grundstellung im Wesentlichen orthogonal zur Be- und Entladerichtung auf der Wandung innerhalb des Eckbeschlags aufliegt und beim Entladen durch das Verschwenken in die Beladeposition eine Auflaufschräge bildet, die das Verschwenken des Verriegelungshebels in die Beladeposition gegen die Kraft der Feder ermöglicht, wird ein Entladen mit äußerst geringer Freigabekraft gewährleistet.

In bevorzugter Ausgestaltung ist ein zweiter Verriegelungshebel vorgesehen, der mit dem ersten Verriegelungshebel auf der Achse in einer Scherenanordnung angeordnet ist. Durch die doppelte beidseitige Verriegelung wird die Zuverlässigkeit der Verriegelungsvorrichtung weiter verbessert und eine deutlich höhere Losbrechkraft aus dem Verriegelungszustand gewährleistet. Um einen übereinstimmenden Bewegungsablauf der beiden Verriegelungshebel in der Scherenanordnung sicherzustellen, ist jedem Verriegelungshebel ein Kniehebel zugeordnet. Wenn zwischen der Achse und dem Fixpunkt die Feder als wenigstens eine Zugfeder eingesetzt ist, ist eine konstruktiv einfach gestaltete Vorbelastung der Verriegelungshebel in ihre Grundstellung (Verriegelungsstellung) gewährleistet.

Nachfolgend wird ein Ausführungsbeispiel der Erfindung anhand der beiliegenden Figuren detailliert beschrieben.

Darin zeigt:
- Fig. 1: eine teils geschnittene Seitenansicht der Verriegelungsvorrichtung mit zugeordnetem Containereckbeschlag vor dem Beladevorgang,
- Fig. 2: die in Fig. 1 dargestellte Ansicht während des Beladevorgangs,
- Fig. 3: die in Fig. 1 dargestellte Ansicht mit verriegelten und gesperrten Container in einer Teilansicht,
- Fig. 4: in einer Detailansicht die Verriegelungshebelanordnung mit zugeordnetem Sperrmittel im zur Entladung freigegebenen Zustand,
- Fig. 5: die Ansicht gemäß Fig. 4 während des Entladevorgangs und
- Fig. 6: eine räumliche Ansicht mit angeschnitten dargestelltem Eckbeschlag nach der Entladung (Zustand wie Fig. 1).

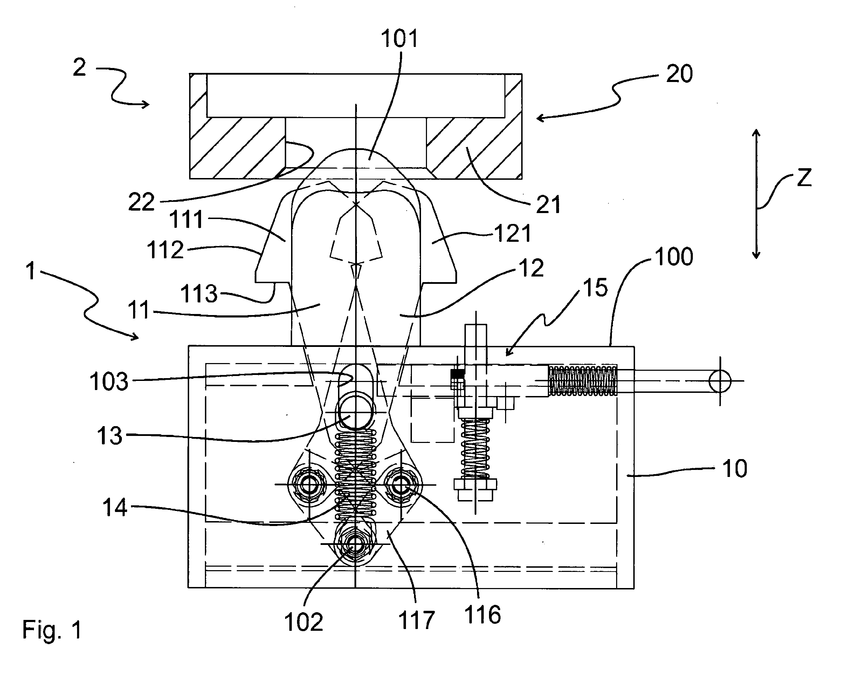

In Fig. 1 ist eine Verriegelungsvorrichtung 1 in einer Ansicht mit gestrichelt dargestelltem Innenleben dargestellt. Über der Verriegelungsvorrichtung 1 ist ein im Schnitt dargestellter Eckbeschlag 20 eines Containers 2 dargestellt. Der Container 2 ist beispielsweise ein standardisierter Frachtcontainer mit wenigstens vier Eckbeschlägen, wie sie im internationalen Frachtverkehr üblich sind. Der Übersichtlichkeit halber ist lediglich ein Eckbeschlag 20 dargestellt. Der Eckbeschlag 20 weist eine Wandung 21 auf, in der eine standardisierte Öffnung 22 eingebracht ist. Bei der manuellen Verriegelung werden sogenannte "Twist-Locks" durch diese Öffnung durchgeführt, um ca. 90 Grad verdreht und dann von unten mit einer Überwurfschraube verspannt. Entsprechend sind derartig gesicherte Container fest auf der Ladefläche, beispielsweise eines Chassis, befestigt.

Die im Ausführungsbeispiel beschriebene Verriegelungsvorrichtung 1 erlaubt eine automatische Verriegelung bei der Beladung mit Sperrung der Verriegelungsposition und ein halbautomatisches Entladen, in dem vor dem Entladevorgang ein Sperrmittel freigegeben wird.

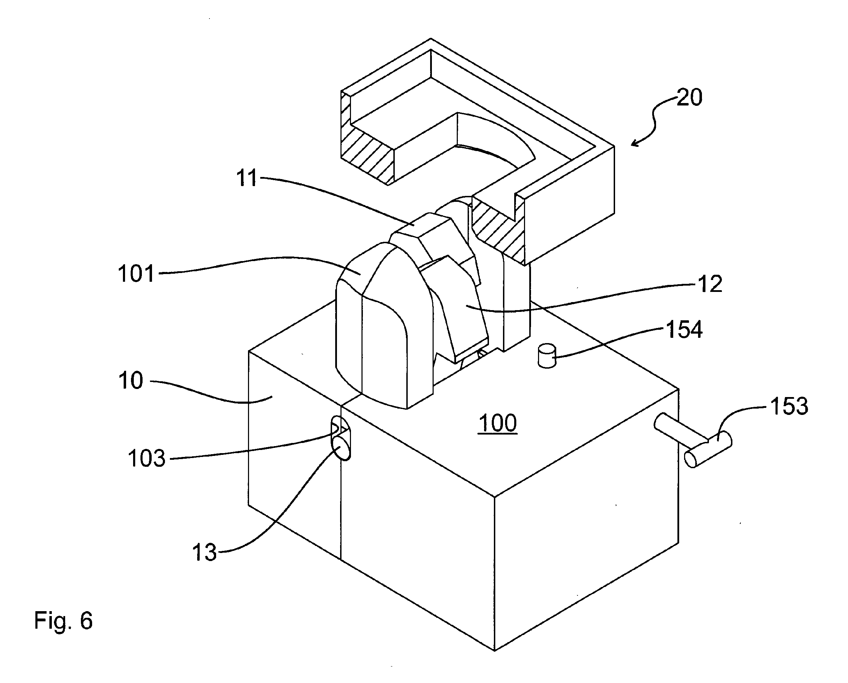

Die Verriegelungsvorrichtung 1 weist ein Gehäuse 10 auf, das beispielsweise mit seiner Oberfläche 100 auf Höhe der Ladefläche des Straßen- oder Eisenbahnfahrzeugs angeordnet ist. Von dieser Ladeflächeebene 100 ragt ein Zentriermittel 101 hervor, das in seinem Querschnitt senkrecht zur Be- und Entladerichtung Z im wesentlichen elliptischen Querschnitt hat. Dabei ist das Zentriermittel 101 im dargestellten Ausführungsbeispiel, wie in Fig. 6 ersichtlich, zweiteilig ausgebildet, wobei zwischen den beiden Teilen des Zentriermittels 101 zwei Verriegelungshebel 11, 12 angeordnet sind. Der erste Verriegelungshebel 11 und der zweite Verriegelungshebel 12 sind in einer Scherenanordnung um eine gemeinsame Achse 13 schwenkbar angeordnet. Der erste Verriegelungshebel 11 ist spiegelbildlich zum zweiten Verriegelungshebel 12 und funktionsmäßig identisch ausgebildet. Nachfolgend werden daher die Details der beiden Verriegelungshebel, insbesondere nur für den ersten Verriegelungshebel 11 erläutert. Sie gelten jedoch ebenso für den zweiten Verriegelungshebel 12.

Der erste Verriegelungshebel 11 weist einen Verriegelungskopf 111 auf, der in der Ansicht gem. Fig. 1 pilzartig aussieht. Der Verriegelungskopf 111 ist an einem oberen Schenkel 114 des Verriegelungshebels 11 ausgebildet. Der Verriegelungskopf 111 weist an seiner nach außen gerichteten Seite eine flache Auflaufschräge 112 auf. Die Unterseite des pilzkopfartig ausgebildeten Verriegelungskopfes 111 ist als Schulter 113 ausgebildet. Unterhalb der Achse 13 ist ein unterer Schenkel 115 des ersten Verriegelungshebels 11 zum oberen Schenkel 114 abgewinkelt ausgebildet. An dem unteren Schenkel 115 ist über Gelenk 116 ein erster Kniehebel 117 schwenkbar angelenkt. Der erste Kniehebel 117 ist an einem ortsfesten Fixpunkt 102 im Gehäuse 10 der Verriegelungsvorrichtung 1 schwenkbar gelagert.

Die Achse 13 der Verriegelungshebelscherenanordnung ist in Langloch 103 im Gehäuse 10 verschiebbar in Richtung der Be- und Entladerichtung Z geführt. Zwischen der Achse 13 und dem Fixpunkt 102 ist eine als Zugfeder ausgebildete Feder 14 vorgesehen.

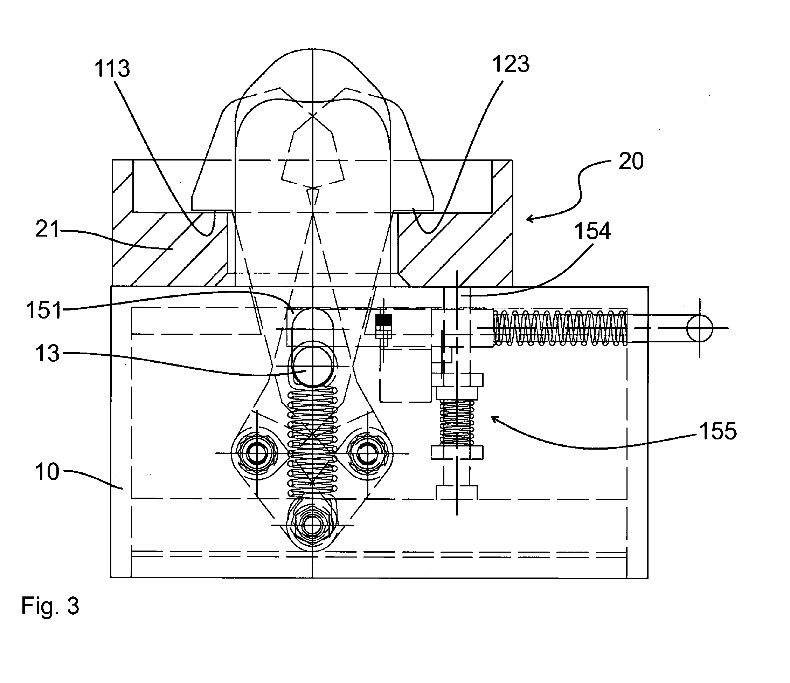

Ferner ist im Gehäuse 10 der Verriegelungsvorrichtung ein Sperrmittel 15 angeordnet. Das Sperrmittel 15 weist einen verschiebbar geführten Riegel 151 auf, der mittels Feder 152 in Richtung seiner Sperrstellung (siehe Fig. 3) federvorbelastet ist. Der Riegel 151 ist durch das Gehäuse 10 in Form eines Handgriffs 153 durchgeführt, um das Sperrmittel manuell aus seiner Sperrstellung in die Freigabestellung verschieben zu können.

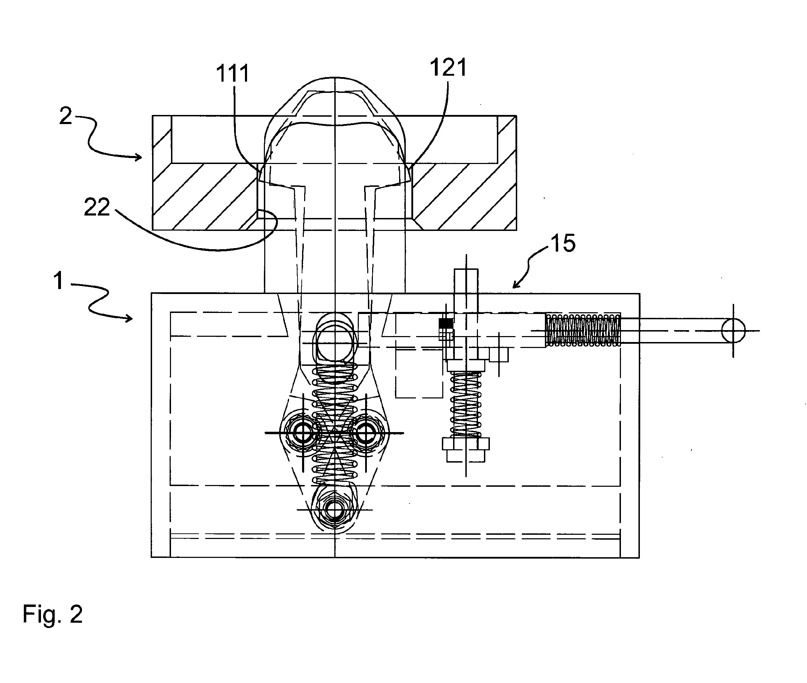

Ferner ist ein Auslösemittel 154 am Sperrmittel 15 vorgesehen, das als Tastelement über die Ladefläche 100 hervorsteht und durch einen beladenen Container niederdrückbar ausgebildet ist (siehe Fig. 2 und 3). Dabei wirkt das Tastelement 154 mit einem ersten federbelasteten Rastmittel 155 zusammen. Weiter ist an dem Sperrmittel 15 ein zweites federbelastetes Rastmittel 156 vorgesehen. Das zweite federbelastete Rastmittel 156 ist im Riegel 151 angeordnet.

Nachfolgend wird anhand der Figuren 1 bis 6 ein vollständiger Belade- und Entladezyklus beschrieben. In Fig. 1 befindet sich der Container 2 über der Verriegelungsvorrichtung 1. Beim weiteren Annähern des Containers 2 auf die Ladefläche 100 wird die Öffnung 22 des Eckbeschlags 20 des Containers 2 über die von der Verriegelungsvorrichtung 1 vorstehenden Zentriermittel 101 zentrierend aufgenommen. Beim weiteren Absenken des Containers 2 gelangen die Auflaufschrägen 112 und 122 der Verriegelungshebel 11, 12 mit der Wandung 21 an der Unterseite der Öffnung 22 des Eckbeschlags 20 in Berührung und drängen die Verriegelungshebel 11, 12 in eine zueinander verschwenkte Stellung gem. Fig. 2 (Beladeposition). Durch die Anordnung mit jeweils einem Kniehebel 117, 127 und die Fixierung dieser Anordnung am Fixpunkt 102 des Gehäuses 10 wird dabei die Achse 13 im Langloch 103 nach oben verschoben (vgl. Fig. 1 und Fig. 2).

Beim weiteren Absenken des Containers gelangt die äußere Wandung 22 des Eckbeschlags 20 in Berührung mit dem Tastelement 154 des Sperrmittels 15. Nun rutschen die Schultern 113, 123 der Verriegelungshebel 11, 12 über die innere Kante der Öffnung 22 hinter die Innenseite der Wandung 21 des Eckbeschlags 20. Gleichzeitig wird durch Niederdrücken des Tastelements 154 das erste federbelastete Rastmittel 155 gegen die Federkraft geöffnet, so dass der Riegel 151 durch die gespannte Druckfeder 152 in in Fig. 3 dargestellter Lage nach links zwischen Achse 13 und Gehäuse 10 vorschnellt. Der Container ist somit nach Abstellen auf der Ladefläche 100 durch das Hintergreifen der Verriegelungshebel 11, 12 im Eckbeschlag 20 verriegelt. Durch den vorgeschobenen Riegel 151 des Sperrmittels 15 ist die Verriegelungsvorrichtung in dieser Position zusätzlich gesperrt. Nunmehr kann der Container sicher im Straßen- und Eisenbahnverkehr transportiert werden. Ein unbeabsichtigtes Abfallen des Containers von Tragfahrzeug (Chassis- oder Eisenbahntragwagen) wird sicher vermieden.

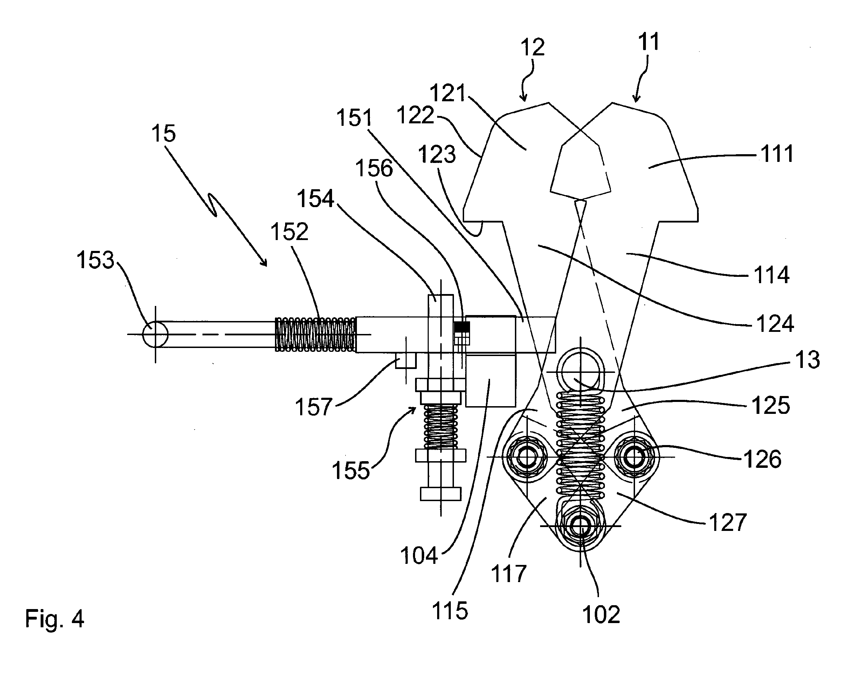

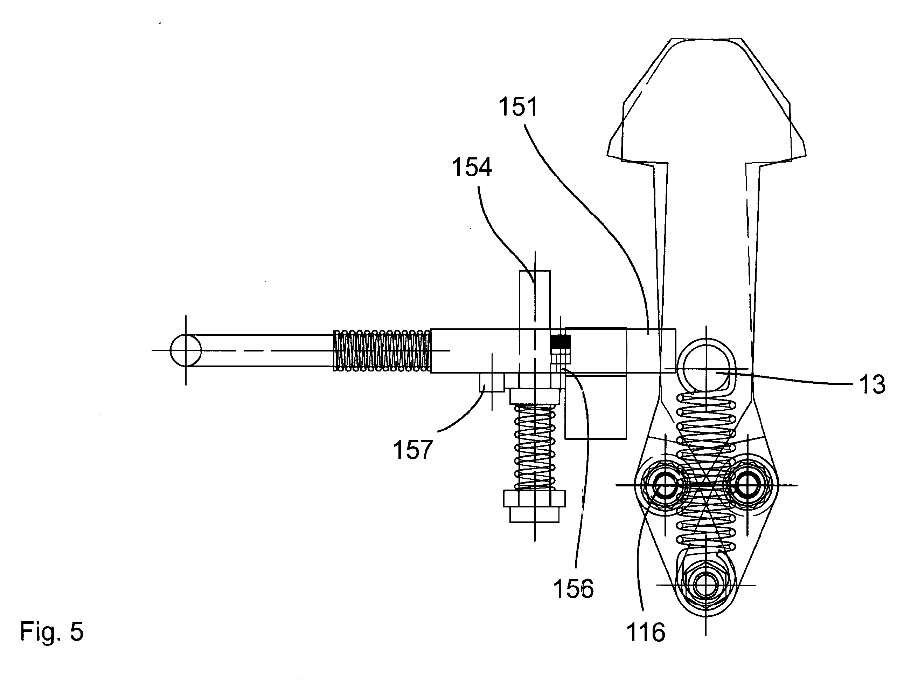

Soll nach einem Transport der Container entladen werden, wird von einer Bedienperson das Sperrmittel 15 durch Ziehen am Handgriff 153 in seine Freigabeposition gezogen. Dabei verrastet der Riegel 151 mit seinem zweiten federbelasteten Rastmittel 156 an einem im Gehäuse 10 vorgesehenen Vorsprung (104) (Fig. 4). In dieser Situation liegt der Container noch auf der Ladefläche 100 auf, die Verriegelungshebel 11, 12 liegen in ihrer federbelasteten Grundstellung, hintergreifen also weiterhin die Wandung 21 im Eckbeschlag 20 des Containers 2. Wird nun der Container von der Ladefläche 100 angehoben, werden die Verriegelungshebel 11, 12 durch die am Verriegelungskopf 111, 121 unterseitig ausgebildeten Schultern 113, 123 beim Anheben des Containers gegen den Druck der Zugfeder 14 in die in Fig. 5 dargestellte Position zurückgedrängt, wobei gleichzeitig beim Abheben des Containers von der Ladefläche 100 das Tastelement 154 durch die Feder des ersten federbelasteten Rastmittels 155 nach oben ausfährt und dabei das zweite federbelastete Rastmittel 156 im Riegel 151 eindrückt und insoweit den Riegel 151 freigibt. Da nun jedoch das erste federbelastete Rastmittel 155 in seiner Rastposition liegt, nämlich der Riegel 151 über Vorsprung 157 am ersten federbelasteten Rastmittel 155 anliegt, verbleibt das Sperrmittel 15 in der in Fig. 5 dargestellten Freigabeposition.

Nach dem vollständigen Abheben des Containers 2 rutschen die beiden Verriegelungshebel 11, 12 federbelastet durch Zugfeder 14 wiederum in die in Fig. 1 und in Fig. 6 räumlich dargestellte Stellung. Die Verriegelungsvorrichtung 1 ist somit für einen erneuten Beladungsvorgang vorbereitet.

### Bezugszeichenliste

- 1: Verriegelungsvorrichtung

- 10: Gehäuse
- 100: Ladefläche, Oberfläche
- 101: Zentriermittel
- 102: Fixpunkt
- 103: Langloch
- 104: Vorsprung

- 11: (erster) Verriegelungshebel
- 111: Verriegelungskopf
- 112: Auflaufschräge
- 113: Schulter
- 114: oberer Schenkel
- 115: unterer Schenkel
- 116: Gelenk
- 117: (erster) Kniehebel

- 12: zweiter Verriegelungshebel
- 121: Verriegelungskopf
- 122: Auflaufschräge
- 123: Schulter
- 124: oberer Schenkel
- 125: unterer Schenkel
- 126: Gelenk
- 127: zweiter Kniehebel

- 13: Achse

- 14: Feder

- 15: Sperrmittel
- 151: Riegel
- 152: Feder
- 153: Handgriff
- 154: Auslösemittel, Tastelement
- 155: erstes federbelastetes Rastmittel
- 156: zweites federbelastetes Rastmittel
- 157: Vorsprung

- 2: Container
- 20: Eckbeschlag
- 21: Wandung
- 22: Öffnung

- Z: Be- und Entladerichtung

## Patentansprüche

1. Verriegelungsvorrichtung (1) zur Verriegelung eines Containers (2) auf einer Ladefläche, insbesondere für Straßenfahrzeuge oder Eisenbahntragwagen, wobei der Container (2) standardisierte Eckbeschläge (20) mit einer Öffnung (22) in einer Wandung (21) aufweist und das Beladen in Be- und Entladerichtung (Z) erfolgt, mit
- einem Gehäuse (10), das zur Ladefläche gerichtet Zentriermittel (101) zur Führung des Eckbeschlages (20) hat,
- einem ersten Verriegelungshebel (11), der um eine senkrecht zur Be- und Entladerichtung (Z) orientierte Achse (13) schwenkbar angeordnet ist und der in Richtung einer Grundstellung Feder (14) vorbelastet ist,
- wobei an seinem zum zu verriegelnden Container (2) gerichteten Ende ein Verriegelungskopf (111) vorgesehen ist,
- der am Zentriermittel (101) angeordnet ist,
- der eine Auflaufschräge (112) aufweist, mit der der erste Verriegelungshebel (11) gegen die Kraft der Feder (14) beim Beladen des Containers (2) von der Wandung (21) an der Öffnung (22) des Eckbeschlags (20) in seine Beladeposition zurückgedrängt wird, und
- in der Grundstellung nach dem Beladen durch die Öffnung (22) hinter die Wandung (21) des Eckbeschlags (20) greift,
**dadurch gekennzeichnet,**
- **dass** die Achse des ersten Verriegelungshebels (11) in Be- und Entladerichtung (Z) verschiebbar geführt ist und
- **dass** ein Kniehebel (117) vorgesehen ist, der mit seinem freien Ende schwenkbar am vom Eckbeschlag (20) entfernten Ende des ersten Verriegelungshebels (11) angelenkt ist und dessen entgegengesetztes Ende an einem Fixpunkt (102) im Gehäuse (10) schwenkbar befestigt ist,
so dass die Achse (13) des ersten Verriegelungshebels (11) in ihrer Beladeposition in Richtung zum Eckbeschlag (20) und in ihrer Grundstellung in Gegenrichtung verschoben ist.

2. Verriegelungsvorrichtung (1) nach Anspruch 1, **dadurch gekennzeichnet, dass** ein Sperrmittel (15) vorgesehen ist, das ein unbeabsichtigtes Abheben des Containers (2) verhindert.

3. Verriegelungsvorrichtung (1) nach Anspruch 2, **dadurch gekennzeichnet, dass** das Sperrmittel (15) einen Riegel (151) aufweist, der in einer Sperrstellung die Achse (13) an einem Verschieben aus der Grundstellung hindert und in einer Freigabestellung ein Verstellen des Verriegelungshebels (11) aus der Grundstellung in die Beladeposition erlaubt.

4. Verriegelungsvorrichtung (1) nach Anspruch 3, **dadurch gekennzeichnet, dass** der Riegel (151) in Richtung der Sperrstellung Feder (152) belastet ist.

5. Verriegelungsvorrichtung (1) nach Anspruch 3 oder 4, **dadurch gekennzeichnet, dass** das Sperrmittel (15) eine erste Laderastposition aufweist, in der der Riegel (151) in der Freigabestellung arretiert ist, wobei ein Auslösemittel (154) vorgesehen ist, so dass mit dem Beladen die erste Laderastposition freigegeben wird.

6. Verriegelungsvorrichtung (1) nach Anspruch 5, **dadurch gekennzeichnet, dass** das Auslösemittel (154) ein Tastelement nahe an der Position des Eckbeschlags (20) ist, das vom aufgeladenen Container (2) ausgelöst wird.

7. Verriegelungsvorrichtung (1) nach Anspruch 5 oder 6, **dadurch gekennzeichnet, dass** das Sperrmittel (15) eine zweite Laderastposition aufweist, in der der Riegel (151) für den Entladevorgang in der Freigabestellung arretiert ist, wobei beim Abheben des Containers (2) das Auslösemittel (154) die zweite Laderastposition freigibt und der Riegel (151) in der Freigabestellung in erster Laderastposition arretiert bleibt.

8. Verriegelungsvorrichtung (1) nach Anspruch 5, 6 oder 7, **dadurch gekennzeichnet, dass** für die erste Laderastposition ein erstes federbelastetes Rastmittel (155) und die zweite Laderastposition ein zweites federbelastetes Rastmittel (156) vorgesehen sind.

9. Verriegelungsvorrichtung (1) nach einem der vorangehenden Ansprüche, **dadurch gekennzeichnet, dass** der Verriegelungskopf (111) an seiner auf der Wandung (21) innerhalb des Eckbeschlags (20) zeigenden Seite eine Schulter (113) hat, die in Grundstellung im Wesentlichen orthogonal zur Be- und Entladerichtung (Z) auf der Wandung (21) innerhalb des Eckbeschlags (20) aufliegt und beim Entladen durch das Verschwenken in die Beladeposition eine Auflaufschräge bildet, die das Verschwenken des Verriegelungshebels (11) in die Beladeposition gegen die Kraft der Feder (14) ermöglicht.

10. Verriegelungsvorrichtung (1) nach einem der vorangehenden Ansprüche, **dadurch gekennzeichnet, dass** ein zweiter Verriegelungshebel (12) vorgesehen ist, der mit dem ersten Verriegelungshebel (11) auf der Achse (13) in einer Scherenanordnung angeordnet ist.

11. Verriegelungsvorrichtung (1) nach Anspruch 8, **dadurch gekennzeichnet, dass** jedem Verriegelungshebel (11) ein Kniehebel (117) zugeordnet ist.

12. Verriegelungsvorrichtung (1) nach einem der vorangehenden Ansprüche, **dadurch gekennzeichnet, dass** zwischen der Achse (13) und dem Fixpunkt (102) die Feder (14) als wenigstens eine Zugfeder eingesetzt ist.

## Claims

1. A locking device (1) for locking a container (2) on a load platform, in particular for road vehicles or rail carrier wagons, wherein the container (2) has standardised corner fittings (20) with an opening (22) in a wall (21) and the loading takes place in a loading and unloading direction (Z), having
- a housing (10) which has, directed toward the load platform, centring means (101) for guiding the corner fitting (20),
- a first locking lever (11) which is pivotably arranged about a spindle (13) oriented perpendicular to the loading and unloading direction (Z) and which is preloaded by a spring (14) in the direction of an initial position,
- wherein at its end directed toward the container (2) to be locked there is provided a locking head (111)
- which is arranged on the centring means (101),
- which has a ramp (112) with which the first locking lever (11) is upon loading of the container (2) forced back into its loading position against the force of the spring (14) by the wall (21) at the opening (22) of the corner fitting (20), and
- in the initial position after loading engages behind the wall (21) of the corner fitting (20) through the opening (22),
**characterised in that**
- the spindle of the first locking lever (11) is displaceably guided in the loading and unloading direction (Z) and
- an articulated lever (117) is provided, whose free end is pivotably articulated on the end, remote from the corner fitting (20), of the first locking lever (11) and whose opposite end is pivotably secured to a fixed point (102) in the housing (10),
so that the spindle (13) of the first locking lever (11) is displaced in the direction towards the corner fitting (20) in its loading position and in the opposite direction in its initial position.

2. A locking device (1) according to claim 1, **characterised in that** a blocking means (15) is provided and prevents an unintended lifting off of the container (2).

3. A locking device (1) according to claim 2, **characterised in that** the blocking means (15) has a bar (151) which in a blocking position prevents the spindle (13) from displacement from the initial position and in a release position permits a shifting of the locking lever (11) from the initial position into the loading position.

4. A locking device (1) according to claim 3, **characterised in that** the bar (151) is spring (152) loaded in the direction of the blocking position.

5. A locking device (1) according to claim 3 or 4, **characterised in that** the blocking means (15) has a first load locking position in which the bar (151) is secured in the release position, wherein a triggering means (154) is provided, so that the first load locking position is released with the loading.

6. A locking device (1) according to claim 5, **characterised in that** the triggering means (154) is a feeler element, close to the position of the corner fitting (20), triggered by the loaded-on container (2).

7. A locking device (1) according to claim 5 or 6, **characterised in that** the blocking means (15) has a second load locking position, in which the bar (151) is secured in the release position for the unloading procedure, wherein the triggering means (154) releases the second load locking position upon lifting off of the container (2) and the bar (151) remains secured in a first load locking position in the release position.

8. A locking device (1) according to claim 5, 6 or 7, **characterised in that** a first spring-loaded locking means (155) is provided for the first load locking position and a second spring-loaded locking means (156) is provided for the second load locking position.

9. A locking device (1) according to any one of the preceding claims, **characterised in that** the locking head (111) has a shoulder (113) at its side directed at the wall (21) within the corner fitting (20), which shoulder (113) in the initial position rests on the wall (21) within the corner fitting (20) in a manner substantially orthogonal to the loading and unloading direction (Z) and upon unloading forms through the pivoting into the loading position a ramp enabling the pivoting of the locking lever (11) into the loading position against the force of the spring (14).

10. A locking device (1) according to any one of the preceding claims, **characterised in that** a second locking lever (12) is provided which with the first locking lever (11) is arranged on the spindle (13) in a scissors arrangement.

11. A locking device (1) according to claim 8, **characterised in that** an articulated lever (117) is associated with each locking lever (11).

12. A locking device (1) according to any one of the preceding claims, **characterised in that** the spring (14) is arranged between the spindle (13) and the fixed point (102) as at least one tension spring.

## Revendications

1. Dispositif de verrouillage (1) pour verrouiller un conteneur (2) sur une plate-forme de chargement, notamment pour des véhicules routiers ou des wagons porteurs ferroviaires, le conteneur (2) présentant des garnitures d'équerre (20) standardisées avec des ouvertures (22) dans une paroi (21) et le chargement se faisant dans la direction de chargement et de déchargement (Z), avec
- un boîtier (10) comportant des moyens de centrage (101) dirigés vers la plate-forme de chargement pour guider les garnitures d'équerre (20),
- un premier levier de verrouillage (11) disposés de sorte à pouvoir basculer autour d'un axe (13) orienté perpendiculairement à la direction de chargement et de déchargement (Z) et qui est précontraint par un ressort (13) en direction d'une position initiale,
- une tête de verrouillage (111) étant prévue à l'extrémité dudit levier dirigée vers le conteneur (2) à verrouiller,
- qui est disposée sur les moyens de centrage (101),
- qui présente un plan incliné (112) à l'aide duquel le premier levier de verrouillage (11) est repoussé dans sa position de chargement par la paroi (21) près de l'ouverture (22) de la garniture d'équerre (20) contre la force du ressort (14) lors du chargement du conteneur (2) et
- qui se met en prise derrière la paroi (21) de la garniture d'équerre (20) dans la position initiale après le chargement à travers l'ouverture (22),
**caractérisé**
- **en ce que** l'axe du premier levier de verrouillage (11) est guidé mobile dans la direction de chargement et de déchargement (Z) et
- **en ce qu'**un levier à rotule (117) est prévu, lequel est articulé avec son extrémité libre à l'extrémité du premier levier de verrouillage (11) opposée à la garniture d'équerre de sorte à pouvoir basculer et dont l'extrémité opposée est fixée pivotante à un point fixe (102) du boîtier (10),
de sorte que l'axe (13) du premier levier de verrouillage (11) est déplacé, dans sa position de chargement, en direction de la garniture d'équerre (20) et, dans sa position initiale, dans la direction inverse.

2. Dispositif de verrouillage (1) selon la revendication 1, **caractérisé en ce qu'**un moyen de blocage (15) est prévu qui empêche un soulèvement non intentionnel du conteneur (2).

3. Dispositif de verrouillage (1) selon la revendication 2, **caractérisé en ce que** le moyen de blocage (15) comprend une targette (151) qui, dans une position de blocage, empêche un déplacement de l'axe (13) hors de la position initiale et, dans une position de libération permet un déplacement du levier de verrouillage (11) de la position initiale à la position de chargement.

4. Dispositif de verrouillage (1) selon la revendication 3, **caractérisé en ce que** la targette (151) est contrainte par ressort (152) en direction de la position de blocage.

5. Dispositif de verrouillage (1) selon la revendication 3 ou 4, **caractérisé en ce que** le moyen de blocage (15) présente une première position d'encliquetage de chargement, dans laquelle la targette (151) est bloquée en position de libération, un moyen de déclenchement (154) étant prévu de sorte que la première position d'encliquetage de chargement est libérée par le chargement.

6. Dispositif de verrouillage (1) selon la revendication 5, **caractérisé en ce que** le moyen de déclenchement (154) est constitué par un élément de contact disposé à proximité de la position de la garniture d'équerre (20) et qui est déclenché par le conteneur (2) chargé.

7. Dispositif de verrouillage (1) selon la revendication 5 ou 6, **caractérisé en ce que** le moyen de blocage (15) présente une deuxième position d'encliquetage de chargement dans laquelle la targette (151) est bloquée dans la position de libération pour la procédure de déchargement, le moyen de déclenchement (154) libérant la deuxième position d'encliquetage de chargement lors du soulèvement du conteneur (2) et la targette (151) reste bloquée dans la position de libération dans la première position d'encliquetage de chargement.

8. Dispositif de verrouillage (1) selon la revendication 5, 6 ou 7, **caractérisé en ce qu'**un premier moyen d'encliquetage (155) contraint par ressort est prévu pour la première position d'encliquetage de chargement et qu'un deuxième moyen d'encliquetage (156) contraint par ressort est prévu pour la deuxième position d'encliquetage de chargement.

9. Dispositif de verrouillage selon l'une des revendications précédentes, **caractérisé en ce que** la tête de verrouillage (111) présente un épaulement (113) sur son côté dirigé vers la paroi (21) à l'intérieur de la garniture d'équerre (20), lequel épaulement, dans la position initiale, repose sensiblement orthogonalement à la direction de chargement et de déchargement (Z) contre la paroi (21) à l'intérieur de la garniture d'équerre (20) et, lors du déchargement, forme un plan incliné suite au basculement dans la position de chargement, lequel plan incliné permet le basculement du levier de verrouillage (11) dans la position de chargement contre la force du ressort (14).

10. Dispositif de verrouillage (1) selon l'une des revendications précédentes, **caractérisé en ce qu'**il est prévu un deuxième levier de verrouillage (12) qui est disposé sur l'axe (13) avec le premier levier de verrouillage (11).

11. Dispositif de verrouillage (1) selon la revendication 8, **caractérisé en ce qu'**un levier à rotule (117) est attribué à chaque levier de verrouillage (11).

12. Dispositif de verrouillage (1) selon l'une des revendications précédentes, **caractérisé en ce qu'**un ressort (14) est placé en tant qu'au moins un ressort de traction entre l'axe (13) et le point fixe (102)
